# EUROPÄISCHE PATENTSCHRIFT

(11) **EP 4 264 176 B1**
(45) Veröffentlichungstag und Bekanntmachung des Hinweises auf die Patenterteilung: **30.07.2025**
(21) Anmeldenummer: 21836387.7
(22) Anmeldetag: 07.12.2021
(51) Int. Cl.: G01B 11/06, G01B 21/04

(54) **VERFAHREN ZUR BERÜHRUNGSLOSEN BESTIMMUNG DER SCHICHTDICKE EINES NASSEN LACKS**
METHOD FOR CONTACTLESSLY DETERMINING THE LAYER THICKNESS OF A WET PAINT
PROCÉDÉ DE DÉTERMINATION SANS CONTACT DE L'ÉPAISSEUR DE COUCHE D'UNE PEINTURE HUMIDE

(30) Priorität: 16.12.2020 DE 102020133703
(43) Veröffentlichungstag der Anmeldung: 25.10.2023
(73) Patentinhaber: Fraunhofer-Gesellschaft zur Förderung der angewandten Forschung e.V., 80686 München (DE)
(72) Erfinder: KLIER, Jens, 67661 Kaiserslautern (DE)
(74) Vertreter: WSL Patentanwälte Partnerschaft mbB
(86) Internationale Anmeldenummer: PCT/EP2021/084663
(87) Internationale Veröffentlichungsnummer: WO 2022/128645

(56) Entgegenhaltungen:
- US-A1- 2009 066 344
- US-A1- 2015 211 989
- US-A1- 2018 038 681
- JOHN F FEDERICI: "Review of Moisture and Liquid Detection and Mapping using Terahertz Imaging", JOURNAL OF INFRARED, MILLIMETER, AND TERAHERTZ WAVES, SPRINGER US, BOSTON, vol. 33, no. 2, 28 January 2012 (2012-01-28), pages 97 - 126, XP035018375, ISSN: 1866-6906, DOI: 10.1007/S10762-011-9865-7

## Beschreibung

Die vorliegende Erfindung betrifft ein Verfahren zur Bestimmung einer Schichtdicke eines auf einer Oberfläche eines Prüfobjektes aufgetragenen Beschichtungsmaterials.

Materialbeschichtungen kommen heutzutage auf einer Vielzahl von Anwendungsgebieten zum Einsatz. So können durch die Beschichtung einer Oberfläche beispielsweise deren Eigenschaften modifiziert werden oder auch die Oberfläche gegenüber Außeneinwirkungen geschützt werden. Exemplarisch kann hier eine wasserabweisende Beschichtung oder eine Beschichtung für den Korrosionsschutz genannt werden.

Die Belastbarkeit und Funktionalität einer solchen Beschichtung hängt maßgeblich von deren Schichtdicke auf der Oberfläche des Materials ab. Je dünner eine Schicht ist, desto größer ist die Gefahr, dass die Schicht nicht die gewünschten Eigenschaften bietet. Gleichzeitig ist jedoch auch eine zu große Schichtdicke einerseits aufgrund der erhöhten Materialkosten aber andererseits auch aufgrund veränderter Eigenschaften ebenfalls unerwünscht.

Die Bestimmung der Schichtdicke eines auf einer Oberfläche eines Prüfobjekts aufgetragenen Beschichtungsmaterials ist daher in vielen Anwendungsbereichen von Bedeutung. Zu nennen ist beispielsweise die Automobilindustrie, bei welcher die Schichtdicke der einzelnen Lackschichten für die Haltbarkeit einer Lackierung eines Kraftfahrzeuges besonders essenziell ist. Aber auch in vielen anderen Bereichen ist es erforderlich oder zumindest von Vorteil, wenn die Schichtdicke eines Beschichtungsmaterials analysiert werden kann, um die Qualität eines Produktes zu überwachen.

Aus dem Stand der Technik sind bereits verschiedene Verfahren zur Bestimmung der Schichtdicke eines Beschichtungsmaterials bekannt. Zunächst wird zwischen zerstörenden und nicht zerstörenden Verfahren unterschieden. Bei ersteren wird beispielsweise eine Probe des Materials entnommen und unter einem Mikroskop analysiert. Dies ist jedoch für industrielle Anwendungen nicht praktikabel, sodass hier weitgehend zerstörungsfreie Messverfahren zum Einsatz kommen.

Auf dem Gebiet der zerstörungsfreien Messverfahren wird daher bereits eine Vielzahl unterschiedlicher Verfahren angeboten. Welches Verfahren wann zum Einsatz kommt, hängt im Wesentlichen von drei Faktoren ab: von dem Beschichtungsmaterial, dem Material des Prüfobjektes bzw. des Oberflächenmaterials des Prüfobjektes und dem Schichtaufbau.

Ultraschallmessungen kommen z.B. bei Mehrschichtsystemen oder der Vermessung von Beschichtungen auf nicht-metallischen Oberflächen zum Einsatz, da mit Hilfe der Ultraschallwellen auch Grenzflächen zwischen Schichten erfasst werden können, die nicht-metallisch sind. Schichtdicken von Beschichtungsmaterialien auf metallischem Untergrund werden hingegen häufig mit magnetinduktiven Verfahren erfasst. Hierbei werden insbesondere Schichtdicken von nicht metallischen Beschichtungen auf ferromagnetischem Untergrund untersucht. Das ebenfalls weit verbreitete Wirbelstromverfahren eignet sich zur Messung elektrisch isolierender Schichten auf Nicht-Eisenmetallen. Den beiden zuletzt genannten Verfahren ist gemein, dass mit ihnen jeweils nur bestimmte Materialkombinationen untersucht werden können. Zudem ist teilweise ein unmittelbarer Kontakt mit der zu untersuchenden Schicht erforderlich. Ultraschallmessungen eignen sich zwar für verschiedene Materialkombinationen, hier besteht allerdings der Nachteil, dass für Ultraschallmessungen in der Regel ein Kontaktmedium erforderlich ist, damit sich die Ultraschallwellen im Schichtsystem ausbreiten können. Diese Möglichkeit ist ebenfalls nicht bei jeder Anwendung gegeben.

Alternativ sind auch mikrowellenbasierte Verfahren oder optische Messverfahren zur Bestimmung der Schichtdicke von Beschichtungen bekannt. Während mikrowellenbasierte Verfahren zwar eine große Eindringtiefe in die Schichtsysteme aufweisen, ist die Auflösungsgrenze für eine minimal detektierbare Schichtdicke aufgrund der größeren Wellenlänge vergleichsweise groß. Optische Verfahren haben hingegen den umgekehrten Nachteil, dass ihre Eindringtiefe in die meisten Materialien zu gering ist.

Darüber hinaus ist es bei vielen industriellen Anwendungen erwünscht, die Schichtdicke eines Beschichtungsmaterial bereits während des Beschichtungsprozesses, d.h. in der Produktion in Echtzeit zu überwachen. Die Überwachung erfolgt dann bereits in dem Moment, in dem das Beschichtungsmaterial, z.B. ein nasser Lack, auf die Oberfläche aufgetragen wird und die Trocknung einsetzt. An dieser Stelle ist ein Großteil der bekannten Verfahren nicht einsetzbar, da beispielsweise die Verfahren bestimmte magnetische oder elektronische Eigenschaften des Materials für eine genaue Messung benötigen, die im nassen oder feuchten Zustand eines Beschichtungsmaterials noch nicht gegeben sind. Andere Verfahren hingegen könnten die Trocknung des Beschichtungsmaterials beeinflussen oder benötigen unmittelbaren Kontakt zu dem Prüfobjekt und sind aus diesem Grund ebenfalls ungeeignet.

Die US 2018/038681 A1 offenbart ein Verfahren zur Charakterisierung eines Stapels aus nassen Lackschichten eines lackierten Körpers durch individuelle Parameter der nassen Lackschichten, basierend auf der Anpassung an ein physikalisches Modell. Das Verfahren umfasst: Aussenden eines THz-Strahlungssignals in Richtung des lackierten Körpers, so dass die THz-Strahlung mit dem Stapel nasser Lackschichten in Wechselwirkung tritt; Erfassen eines Antwortsignals, wobei das erfasste THz-Strahlungssignal mit dem Stapel nasser Lackschichten in Wechselwirkung getreten ist; Bestimmen von Modellparametern des physikalischen Modells durch Optimieren der Modellparameter, so dass ein vorhergesagtes Antwortsignal des physikalischen Modells an das erfasste Antwortsignal angepasst wird, wobei zumindest ein Teil der Modellparameter optische Eigenschaften der nassen Lackschichten und eine Dicke der nassen Lackschichten beschreiben; und Bestimmen der individuellen Lackschichtparameter mindestens einer der nassen Lackschichten aus den bestimmten Modellparametern.

Die US 2015/211989 A1 offenbart zudem ein Verfahren zum Charakterisiern einer nassen Farbschicht eines lackierten Körpers durch Farbschichtparameter, die auf der Anpassung an ein physikalisches Modell basieren. Das Verfahren wird von einem Sensorsystem berührungslos durchgeführt, wobei das Sensorsystem ein Sendersystem zum Aussenden von THz-Strahlung, ein Detektorsystem zum Erfassen von THz-Strahlung und eine mit dem Sendersystem und dem Detektorsystem betriebsmäßig gekoppelte Verarbeitungseinheit umfasst. Das Verfahren umfasst: Aussenden eines THz-Strahlungssignals in Richtung des lackierten Körpers durch das Sendersystem, so dass die THz-Strahlung mit der nassen Lackschicht in Wechselwirkung tritt, wobei die nasse Lackschicht einen Trocknungsprozess noch nicht beendet hat, währenddessen die nasse Lackschicht zu einer trockenen Lackschicht wird; und Erfassen eines Antwortsignals durch das Detektorsystem, wobei das erfasste THz-Strahlungssignal mit der nassen Lackschicht in Wechselwirkung getreten ist.

Der vorliegenden Erfindung liegt daher die Aufgabe zugrunde, ein Verfahren zur Bestimmung einer Schichtdicke eines auf einer Oberfläche eines Prüfobjekts aufgetragenen Beschichtungsmaterials bereitzustellen, mit welchem sich die Schichtdicke eines nassen Beschichtungsmaterials bestimmen lässt.

Erfindungsgemäß wird die Aufgabe durch ein Verfahren zur Bestimmung einer Schichtdicke eines auf einer Oberfläche eines Prüfobjekts aufgetragenen Beschichtungsmaterials gelöst, wobei das Verfahren die folgenden Schritte aufweist:
a. Durchführen einer Kalibrierroutine mit den Schritten:
   i. Auftragen des nassen Beschichtungsmaterials auf eine Kalibrieroberfläche mit einer ersten Anfangsschichtdicke,
   ii. Beleuchten der mit dem Beschichtungsmaterial beschichteten Kalibrieroberfläche mit einer elektromagnetischen Strahlung zu einem Endzeitpunkt eines ersten Trocknungszeitraums nach dem Auftragen in Schritt a.i.,
   iii. Detektieren eines elektrischen Feldes der an der mit dem Beschichtungsmaterial beschichteten Kalibrieroberfläche reflektierten elektromagnetischen Strahlung in Abhängigkeit von der Zeit zu dem Endzeitpunkt des ersten Trocknungszeitraums als Kalibriersignal,
   iv. Bestimmen einer Schichtdicke des Beschichtungsmaterials zu dem Endzeitpunkt des ersten Trocknungszeitraums,
   v. Ablegen eines Datensatzes in einer Datenbank, wobei der Datensatz mindestens die bestimmte Schichtdicke, den ersten Trocknungszeitraum und einen das Kalibriersignal repräsentierenden Parameter beschreibt,
   vi. Wiederholen der Schritte ii. bis v. für einen Endzeitpunkt zumindest eines zweiten Trocknungszeitraums nach dem Auftragen in Schritt a.i., wobei der zweite Trocknungszeitraum von dem ersten Trocknungszeitraum verschieden ist,
b. Durchführen einer Probenmessung mit den Schritten:
   i. Auftragen des nassen Beschichtungsmaterials auf eine Oberfläche des Prüfobjekts mit einer beliebigen Anfangsschichtdicke,
   ii. Beleuchten der mit dem Beschichtungsmaterial beschichteten Oberfläche des Prüfobjekts mit der elektromagnetischen Strahlung zu einem Endzeitpunkt eines beliebigen Trocknungszeitraums nach dem Auftragen in Schritt b.i., wobei die Schichtdicke des Beschichtungsmaterials unbekannt ist,
   iii. Detektieren eines elektrischen Feldes der an der mit dem Beschichtungsmaterial beschichteten Oberfläche des Prüfobjekts reflektierten elektromagnetischen Strahlung in Abhängigkeit von der Zeit zu dem Endzeitpunkt des beliebigen Trocknungszeitraumes als Messsignal,
c. Bestimmen der Schichtdicke des Beschichtungsmaterials auf der Oberfläche des Prüfobjekts zu dem Endzeitpunkt des beliebigen Trocknungszeitraums mit den Schritten:
   i. Bestimmen eines aus der Datenbank abgeleiteten Vergleichssignals mit der geringsten Abweichung zu dem Messsignal durch Vergleichen aus der Datenbank abgeleiteter Vergleichssignale zu Endzeitpunkten verschiedener Trocknungszeiträume mit dem Messsignal,
   ii. Bestimmen der Schichtdicke des Beschichtungsmaterials auf der Oberfläche des Prüfobjektes zu dem Endzeitpunkt des beliebigen Trocknungszeitraums anhand des in Schritt c.i. bestimmten Vergleichssignals mit der geringsten Abweichung zu dem Messsignal,.
d. Anpassen einer ersten mathematischen Funktion an die in Schritt a.iv. bestimmten Schichtdicken des Beschichtungsmaterials in Abhängigkeit von einem auf den Endzeitpunkt der verschiedenen Trocknungszeiträume basierenden Flüssigkeitsgehalts für die erste Anfangsschichtdicke,
e. Bestimmen eines der Schichtdicke von 0 mm zugeordneten fiktiven Flüssigkeitsgehalts für die erste Anfangsschichtdicke aus der ersten mathematischen Funktion als erstes Wertepaar,
f. Bestimmen eines aktuellen Flüssigkeitsgehalts zu dem Endzeitpunkt des beliebigen Trocknungszeitraums für die beliebige Anfangsschichtdicke aus der in Schritt c.ii. bestimmten Schichtdicke des Beschichtungsmaterials und dem in Schritt b.iii. erfassten Messsignal als zweites Wertepaar,
g. Anpassen der ersten mathematischen Funktion, sodass das erste und zweite Wertepaar von der ersten mathematischen Funktion beschrieben werden,
h. Berechnen einer Schichtdicke des Beschichtungsmaterials bei der beliebigen Anfangsschichtdicke bei einem beliebigen Flüssigkeitsgehalt von X % unter Verwendung der in Schritt g. angepassten ersten mathematischen Funktion.

Kurz zusammengefasst ermöglicht das erfindungsgemäße Verfahren die Bestimmung einer Schichtdicke eines Beschichtungsmaterials auf Grundlage einer Kalibrierroutine, die nur einmalig an der zu untersuchenden Materialkombination durchgeführt werden muss und das Reflexionsverhalten des Beschichtungsmaterials in Abhängigkeit von den jeweiligen Trocknungszuständen mit einer Schichtdicke in Relation setzt. Während der Kalibrierroutine werden damit alle Daten ermittelt, die für die spätere Bestimmung einer Schichtdicke eines Beschichtungsmaterials auf einer Probenoberfläche mit einer unbekannten Anfangsschichtdicke erforderlich sind. Zu diesem Zweck wird ein an dem Prüfobjekt erfasstes Signal mit aus der Kalibrierroutine bekannten oder abgeleiteten Vergleichssignalen verglichen.

Das erfindungsgemäße Verfahren erfolgt dabei insbesondere zerstörungsfrei und kontaktlos und kann zu beliebigen Zeitpunkten während dem Beschichtungsverfahren und dem anschließenden Trocknungsprozess eingesetzt werden. Es versteht sich, dass sich das erfindungsgemäße Verfahren damit auch insbesondere für Messungen von Schichtdicken an nassen oder feuchten Beschichtungsmaterialien eignet, aber auch für Messungen an bereits getrockneten Beschichtungen auf Oberflächen.

Dabei spielt weder das Material der Beschichtung noch das Material der Oberfläche des Prüfkörpers eine herausragende Rolle, sofern ein Brechungsindexunterschied zwischen der Beschichtung und der Prüfkörperoberfläche gewährleistet ist, der gemäß den Fresnelschen Formeln eine ausreichende Reflexion der Strahlung an der Grenzfläche der Beschichtung und der Prüfobjektoberfläche ermöglicht. In einer Ausführungsform wird das erfindungsgemäße Verfahren für Mehrschichtsysteme erweitert, wobei auch in diesem Fall gewährleistet sein muss, dass die zu untersuchende Beschichtung einen ausreichenden Brechungsindexunterschied zu den angrenzen Schichten aufweist.

Das erfindungsgemäße Verfahren arbeitet damit in einer Reflexionsgeometrie, die den Vorteil bietet, dass der Detektor auf der gleichen Seite des Prüfobjekts wie der Sender der elektromagnetischen Strahlung angeordnet werden kann. Diese Messgeometrie ist für viele industrielle Anwendungen von Vorteil, da sie unabhängig von der Ausdehnung und der Geometrie des Prüfobjektes ist. Insbesondere ist in einer Ausführungsform ein Beschichtungswerkzeug direkt mit einer Messeinrichtung versehen, die derart eingerichtet ist, dass das erfindungsgemäße Verfahren mit dieser ausgeführt wird.

Im Detail wird erfindungsgemäß während der Kalibrierroutine das Reflexionsverhalten für elektromagnetische Strahlung zu zwei Trocknungszeitpunkten und damit indirekt das Trocknungsverhalten eines nassen Beschichtungsmaterials auf einer Kalibrieroberfläche analysiert.

Unter einem Trocknungszeitpunkt wird derjenige Zeitpunkt verstanden, bis zu welchem eine bestimmte Trocknungszeit, gerechnet ab dem Auftragungszeitpunkt des Beschichtungsmaterials, verstrichen ist. Für das erfindungsgemäße Verfahren ist lediglich von Bedeutung, dass zu den in der Kalibrieroutine ermittelten Kalibriersignalen die jeweiligen Zeiträume bekannt sind, in denen das Beschichtungsmaterial ab dem Auftragungszeitpunkt getrocknet ist. Es ist daher auch ausreichend, wenn in der Datenbank unmittelbar Trocknungszeitpunkte abgelegt werden, sofern der Auftragungszeitpunkt bekannt ist und somit der Trocknungszeitraum ermittelt werden kann.

Bei der Kalibrieroberfläche handelt es sich in einer Ausführungsform vorzugsweise um eine metallische Oberfläche, da dies den Vorteil bietet, dass die auftreffende elektromagnetische Strahlung vollständig reflektiert wird und damit ein gutes Signal-Rausch-Verhältnis erzielt werden kann. Letzteres wiederum ist von Vorteil, um die Wechselwirkungseigenschaften des Beschichtungsmaterials mit der elektromagnetischen Strahlung genau zu bestimmen.

Um die Wechselwirkungseigenschaften des Beschichtungsmaterials in Abhängigkeit von dem Trocknungszeitraum, also einem Zeitraum indem sich die Materialeigenschaften aufgrund der Trocknung verändert haben, zu bestimmen, wird das Beschichtungsmaterial mit einer elektromagnetischen Strahlung zu einem Endzeitpunkt eines ersten Trocknungszeitraums nach dem Auftragen auf die Kalibrieroberfläche beleuchtet und das an der mit dem Beschichtungsmaterial beschichteten Kalibrieroberfläche reflektierte elektromagnetische Feld in Abhängigkeit von der Zeit zu dem Endzeitpunkt des ersten Trocknungszeitraums als Kalibriersignal detektiert und diese Kalibriermessung mindestens zu einem Endzeitpunkt eines zweiten Trocknungszeitraumes wiederholt, wobei der erste Trocknungszeitraum und der zweite Trocknungszeitraum voneinander verschieden sind.

Vorzugsweise beginnt diese Kalibriermessung an dem Beschichtungsmaterial unmittelbar nach dem Auftragen auf die Kalibrieroberfläche und endet, wenn das Beschichtungsmaterial vollständig ausgetrocknet ist. Somit wird das gesamte Trocknungsverhalten abgebildet.

Vorzugsweise erfolgt die Wiederholung der Kalibriermessung gemäß den Schritten ii. bis v. zu mehreren Endzeitpunkten verschiedener Trocknungszeiträume. Je mehr Kalibriermessungen während einer Kalibrierroutine ausgeführt werden, desto größer ist der Datensatz, der für den späteren Vergleich mit der Probenmessung herangezogen werden kann und desto genauer kann die Schichtdicke des Beschichtungsmaterials bestimmt werden.

Um das detektierte elektrische Feld der reflektierten elektromagnetischen Strahlung in Relation zu der Schichtdicke des Beschichtungsmaterials zu setzen, ist es erfindungsgemäß während der Kalibrierroutine erforderlich, dass die Schichtdicke des Beschichtungsmaterials ebenfalls zu den Endzeitpunkten der jeweiligen Trocknungszeiträume bestimmt wird. Die Schichtdicke zu diesen Endzeitpunkten der Trocknungszeiträume kann entweder bekannt sein, beispielsweise aufgrund eines bekannten Trocknungsverhaltens in Abhängigkeit von der Zeit ab dem Auftragungszeitpunkt, oder mit einem anderen Verfahren bestimmt werden. Dabei kann die Bestimmung der Schichtdicke entweder vor, während oder nach der Detektion des elektrischen Feldes der elektromagnetischen Strahlung erfolgen, sofern sichergestellt ist, dass es innerhalb des zeitlichen Abstands der Schichtdickenmessung in Schritt a.iv. von der Detektion des elektrischen Feldes in Schritt a.iii. nicht zu einer signifikanten Änderung der Schichtdicke des Beschichtungsmaterials kommt.

In einer Ausführungsform erfolgt beispielsweise die Bestimmung der Schichtdicke mittels eines laserbasierten Verfahrens, wobei die Laufzeit einer Laserstrahlung von einem Abstrahlpunkt zur Beschichtungsoberfläche hin und wieder zurück zum Abstrahlpunkt in Abhängigkeit von der Zeit erfasst wird und auf Grundlage der Laufzeitmessungen die Schichtdicke des Beschichtungsmaterials ermittelt werden kann. Um in einem derartigen Verfahren absolute Werte für die Schichtdicke zu erhalten, wird beispielsweise zunächst die Laufzeit der Laserstrahlung zu der Kalibrieroberfläche ermittelt und die Laufzeit der Laserstrahlung zur der Beschichtungsoberfläche von diesem Wert abgezogen.

Um die nachfolgende Probenmessung auswerten zu können, werden die Daten, die während der Kalibrierroutine erfasst werden, in einer Datenbank hinterlegt. Dabei enthält die Datenbank mindestens die bestimmte Schichtdicke, den dazugehörigen Trocknungszeitraum und einen das Kalibriersignal repräsentierenden Parameter. Bei dem das Kalibriersignal repräsentierenden Parameter kann es sich entweder um das unmittelbar erfasste elektrische Feld in Abhängigkeit von der Zeit handeln oder einen dieses elektrische Feld repräsentierenden Parameter.

Erfindungsgemäß ist es nicht notwendig, die Anfangsschichtdicke, mit welcher das Beschichtungsmaterial auf die Kalibrieroberfläche aufgetragen wurde, in der Datenbank abzulegen. Die Anfangsschichtdicke muss auch bei der späteren Probenmessung nicht bekannt sein. Die Auswertung der Schichtdicke des Beschichtungsmaterials erfolgt daher in einer Ausführungsform ohne Kenntnis der Anfangsschichtdicken in der Kalibriermessung oder der Probenmessung.

Nachdem die Kalibrierroutine beendet wurde, wird die Probenmessung durchgeführt, die im Wesentlichen analog zu der Kalibrierroutine erfolgt. Allerdings wird an dieser Stelle das nasse Beschichtungsmaterial auf eine Oberfläche des Prüfobjektes mit einer beliebigen Anfangsschichtdicke aufgetragen, die nicht zwangsläufig bekannt ist. Darüber hinaus wird die Schichtdicke nicht mit einem separaten Verfahren erfasst, sondern soll nun auf Grundlage der erfolgten Kalibrierroutine und der Probenmessung ermittelt werden. Ziel des erfindungsgemäßen Verfahrens ist es daher, die Schichtdicke des Beschichtungsmaterials und vorzugsweise auch den Trocknungszustand zu dem Endzeitpunkt des beliebigen, d.h. unbekannten Trocknungszeitraums zu ermitteln.

Dazu wird das aufgetragene Beschichtungsmaterial ebenfalls mit der elektromagnetischen Strahlung beleuchtet und das elektrische Feld der an der Oberfläche reflektierten elektromagnetischen Strahlung zu einem Endzeitpunkt des beliebigen Trocknungszeitraums detektiert. Bekannt ist aus der Probemessung also lediglich das elektrische Feld der an der beschichteten Oberfläche reflektierten elektromagnetischen Strahlung.

Aus dieser Probenmessung wird die Schichtdicke des Beschichtungsmaterials zu dem Endzeitpunkt des beliebigen Trocknungszeitraumes bestimmt, indem das Messsignal mit aus der Datenbank abgeleiteten Vergleichssignalen verglichen wird und aus diesem Vergleich ein aus der Datenbank abgeleitetes Vergleichssignal mit der geringsten Abweichung zu dem Messsignal ermittelt wird. Wurde das Vergleichssignal mit der geringsten Abweichung zu dem Messsignal ermittelt, kann anhand der Datenbank die zu dem Vergleichssignal dazugehörige Schichtdicke ermittelt werden. Darüber hinaus wird in einer Ausführungsform insbesondere auch der Trocknungszustand aus der Datenbank bestimmt werden.

Das erfindungsgemäße Verfahren eignet sich zudem auch für die Bestimmung einzelner Schichtdicken in einem Mehrschichtsystem. Da das elektrische Feld der reflektierten elektromagnetischen Strahlung in Abhängigkeit von der Zeit erfasst wird, können auf Grundlage einer Laufzeitmessung der elektromagnetischen Strahlung Laufzeitunterschiede zwischen den einzelnen Grenzflächen der jeweiligen Schichten festgestellt und für die Auswertung der Schichtdicke verwendet werden.

Wenn im Sinne der Erfindung beansprucht wird, dass die Erfassung des elektrischen Feldes in Abhängigkeit von der Zeit zu einem Endzeitpunkt des Trocknungszeitraumes erfolgt, so ist gemeint, dass die Zeitabhängigkeit des elektrischen Feldes im Bereich weniger Pikosekunden liegt. Zudem beträgt auch die Messdauer für die vollständige zeitabhängige Erfassung des elektrischen Feldes nur wenige Millisekunden. Die Zeitabhängigkeit des elektrischen Feldes und die Messdauer hierfür liegen damit in einem Zeitbereich, der im Vergleich zu dem Trocknungszeitraum vernachlässigbar klein ist, sodass die Messung zu einem Endzeitpunkt des Trocknungszeitraumes erfolgt, auch wenn der Endzeitpunkt genaugenommen eine geringe zeitliche Ausdehnung aufweist, über die hinweg das elektrische Feld in Abhängigkeit von der Zeit erfasst wird.

In einer Ausführungsform des erfindungsgemäßen Verfahrens wird in Schritt a.v. das Kalibriersignal als Parameter in dem Datensatz der Datenbank abgelegt. Insbesondere wird in Schritt c.i. das Kalibriersignal als Vergleichssignal verwendet und das Bestimmen der Schichtdicke in Schritt c.ii. erfolgt durch Auslesen der zu dem bestimmten Kalibriersignal in dem Datensatz der Datenbank beschriebenen Schichtdicke. Mit anderen Worten wird das Messsignal direkt mit den Kalibriersignalen verglichen. Dies bietet den Vorteil, dass das erfindungsgemäße Verfahren mit geringem Rechenaufwand die Schichtdicke des Beschichtungsmaterials bestimmt. Es ist kein Umrechnen des Kalibriersignals erforderlich, wodurch Rechenleistung und Zeit eingespart wird.

In einer weiteren Ausführungsform weist die Kalibriermessung weiterhin den Schritt auf, dass aus der in Schritt a.iv. bestimmten Schichtdicke und dem Kalibriersignal mindestens eine dielektrische Eigenschaft für den Endzeitpunkt des ersten Trocknungszeitraums abgeleitet wird, wobei die dielektrische Eigenschaft in dem Datensatz in Schritt a.v. als Parameter zusätzlich zu dem Kalibriersignal oder statt dem Kalibriersignal abgelegt wird, wobei das Bestimmen des Vergleichssignals mit der geringsten Abweichung in Schritt c.i. derart erfolgt, dass die aus den Parametern für Endzeitpunkte verschiedener Trocknungszeiträume abgeleiteten Vergleichssignale durch simulierte Vergleichssignale ergänzt oder ersetzt werden, wobei die simulierten Vergleichssignale auf einer Interpolation der abgeleiteten dielektrischen Eigenschaften und der gemessenen Schichtdicken zweier Endzeitpunkte verschiedener Trocknungszeiträume beruhen und wobei in Schritt c.ii. die mit dem simulierten Vergleichssignal verknüpfte interpolierte Schichtdicke als Schichtdicke des Beschichtungsmaterials auf der Oberfläche des Prüfobjektes verwendet wird, wenn in Schritt c.i. ein simuliertes Vergleichssignal als Vergleichssignal mit der geringsten Abweichung zu dem Messsignal bestimmt wird.

Gemäß dieser Ausführungsform wird der Vergleichsdatensatz erweitert. Der Vergleichsdatensatz besteht hierbei entweder aus einer Mischung aus Kalibriersignalen und simulierten Vergleichssignalen oder die Kalibriersignale werden ebenfalls von simulierten Vergleichssignalen abgebildet. Die simulierten Vergleichssignale werden anhand der dielektrischen Eigenschaften des Beschichtungsmaterials zu dem jeweiligen Endzeitpunkt des Trocknungszeitraums ermittelt, indem diese aus den erfassten Kalibriersignalen und der entsprechenden Schichtdicke ausgewertet werden.

Für eine solche Auswertung wird in der Regel zusätzlich zu den Kalibriersignalen, die bei einer Wechselwirkung der elektromagnetischen Strahlung mit dem Beschichtungsmaterial erfasst wurden, ein Referenzsignal an der Kalibrieroberfläche oder einem anderen metallischen Spiegel aufgenommen, auf deren Oberfläche kein Beschichtungsmaterial vorhanden ist und die auftreffende elektromagnetische Strahlung damit nahezu vollständig reflektiert wird. Ist die Schichtdicke während der Kalibriermessung bekannt, können aus dem Vergleich des Referenzsignals mit dem Kalibriersignal unter Annahme entsprechender physikalischer Gesetzmäßigkeiten wie dem Lambert-Beerschen-Gesetz und den Fresnelschen Formeln dielektrischen Eigenschaften des Beschichtungsmaterials wie der Brechungsindex, der Absorptionskoeffizient oder die Permittivität bestimmt werden.

In einer Ausführungsform erfolgt die Auswertung der dielektrischen Eigenschaften des Beschichtungsmaterials zudem frequenzabhängig, indem das Kalibriersignal und das Referenzsignal, die in Abhängigkeit von der Zeit erfasst wurden, mittels einer Fourier-Transformation in den Frequenzbereich überführt und dort miteinander verglichen werden.

Auf Grundlage der dielektrischen Eigenschaften und der bestimmten Schichtdicke werden in dieser Ausführungsform simulierte Vergleichssignale erzeugt, indem ein Ausgangssignal an die jeweiligen Parameter angepasst wird. Durch Interpolation der dielektrischen Eigenschaften und der bestimmten Schichtdicke zwischen zwei Endzeitpunkten von Kalibriermessungen, die für die gleiche Anfangsschichtdicke und vorzugsweise auch an dem gleichen Punkt auf der Kalibrieroberfläche erfasst wurden, wird damit in einer Ausführungsform der Vergleichsdatensatz erweitert. Dies bietet den Vorteil, dass auch wenige Messungen während der Kalibrierroutine zu einem Vergleichsdatensatz führen, auf dessen Basis die Schichtdicke des Beschichtungsmaterials genauer bestimmt werden kann.

Hierbei gilt, je größer der Datensatz gewählt wird, desto genauer kann die Schichtdicke des Beschichtungsmaterials ermittelt werden. Je nach Trocknungsverhalten des Beschichtungsmaterials ist allerdings auf eine ausreichende Anzahl von Kalibriermessungen zu achten. Kann das Trocknungsverhalten des Beschichtungsmaterials jedoch gut vorhergesagt werden, beispielsweise durch ein lineares Verhalten, sind nur wenige Kalibriermessungen erforderlich, um dennoch einen großen Vergleichsdatensatz zu erhalten, mit welchen auch Schichtdicken bestimmt werden können, für die keine Kalibriermessungen existieren, sondern lediglich Vergleichssignale simuliert wurden.

In einer weiteren Ausführungsform wird für jedes Vergleichen in Schritt c.i. ein Korrelationskoeffizient für eine Korrelation zwischen dem jeweiligen Vergleichssignal und dem Messsignal berechnet, wobei der größte Korrelationskoeffizient bestimmt wird und wobei als Schichtdicke des Beschichtungsmaterials auf der Oberfläche des Prüfobjektes zu dem Endzeitpunkt des beliebigen Trocknungszeitraums die Schichtdicke aus der Datenbank ausgelesen wird, die in dem Datensatz des Vergleichssignals mit dem größten Korrelationskoeffizienten beschrieben ist.

Insbesondere nimmt in einer Ausführungsform der Korrelationskoeffizient Werte zwischen 0 und 1 an, wobei der Wert 1 eine exakte Übereinstimmung zwischen Vergleichssignal und Messsignal und der Wert 0 keine Übereinstimmung zwischen Vergleichssignal und Messsignal bedeutet.

Die Ermittlung eines Korrelationskoeffizienten für jeden einzelnen Vergleich der Probenmessung mit den Vergleichssignalen verbessert die Genauigkeit der Bestimmung der Schichtdicke, indem exakt das Vergleichssignal ermittelt wird, welches die höchste Übereinstimmung mit der Probenmessung hat.

In einer weiteren Ausführungsform werden die Schritte a.i. bis a.vi. für mindestens eine zweite Anfangsschichtdicke, die von der ersten Anfangsschichtdicke verschieden ist, wiederholt. Dies bietet ebenfalls den Vorteil, dass der Datensatz der Vergleichsdaten vergrößert wird und somit auch verschiedene Trocknungszustände bei verschiedenen Anfangsschichtdicken abgebildet werden können. Damit ist das Verfahren insbesondere unabhängig von der verwendeten Anfangsschichtdicke des Beschichtungsmaterials.

Erfindungsgemäß weist das Verfahren weiterhin die Schritte auf:
d. Anpassen einer ersten mathematischen Funktion an die in Schritt a.iv. bestimmten Schichtdicken des Beschichtungsmaterials in Abhängigkeit von einem auf den Endzeitpunkt der verschiedenen Trocknungszeiträume basierenden Flüssigkeitsgehalts für die erste Anfangsschichtdicke,
e. Bestimmen eines der Schichtdicke von 0 mm zugeordneten fiktiven Flüssigkeitsgehalts für die erste Anfangsschichtdicke aus der ersten mathematischen Funktion als erstes Wertepaar,
f. Bestimmen eines aktuellen Flüssigkeitsgehalts zu dem Endzeitpunkt des beliebigen Trocknungszeitraums für die beliebige Anfangsschichtdicke aus der in Schritt c.ii. bestimmten Schichtdicke des Beschichtungsmaterials und dem in Schritt b.iii. erfassten Messsignal als zweites Wertepaar,
g. Anpassen der ersten mathematischen Funktion, sodass das erste und zweite Wertepaar von der ersten mathematischen Funktion beschrieben werden,
h. Berechnen einer Schichtdicke des Beschichtungsmaterials bei der beliebigen Anfangsschichtdicke bei einem beliebigen Flüssigkeitsgehalt von X % unter Verwendung der in Schritt g. angepassten ersten mathematischen Funktion.

Dadurch bietet das erfindungsgemäßen Verfahren den Vorteil, dass nicht nur die Schichtdicke zum aktuellen Trocknungszustand erfasst werden kann, sondern auch die Schichtdicke zu einem beliebigen Trocknungszeitpunkt, der für ein Beschichtungsverfahren relevant ist, prognostiziert werden kann. Besonders relevant ist beispielsweise ein Flüssigkeitsgehalt von X = 0 %, d.h. die Schichtdicke nach vollständiger Austrocknung des Beschichtungsmaterials.

Um diese Prognose zu ermöglichen, wird anhand der Materialeigenschaften und/oder der Schichtdicke, die aus dem Probenmesssignal ausgewertet werden können, der Feuchtigkeitsgehalt des Beschichtungsmaterials zu dem Endzeitpunkt des Trocknungszeitraums bestimmt. Durch die Verwendung entsprechender Algorithmen können aus einer Probenmessung sowohl die Schichtdicke als auch die dielektrischen Eigenschaften gleichzeitig ausgewertet werden.

Ist der aktuelle Flüssigkeitsgehalt ermittelt, kann die mathematische Funktion hinreichend angepasst werden, sodass sowohl das erste Wertepaar als auch das zweite Wertepaar von der ersten mathematischen Funktion beschrieben werden. In einem letzten Schritt h. erfolgt dann die Berechnung einer Schichtdicke des Beschichtungsmaterials bei der beliebigen Anfangsschichtdicke bei einem Flüssigkeitsgehalt von 0 % unter Verwendung der angepassten ersten mathematischen Funktion.

Mit Hilfe der Prognose der Schichtdicke im trockenen Zustand kann bereits während des Beschichtungsvorgangs dieser entsprechend angepasst werden, sollte sich herausstellen, dass die anvisierte Zielschichtdicke im trockenen Zustand nicht erreicht wird. Dies vermindert qualitativ minderwertige Ware, reduziert Kosten und schont wertvolle Ressourcen.

Insbesondere ist die erste mathematische Funktion in einer Ausführungsform eine lineare Funktion. In diesem Fall lässt sich die Schichtdicke des Beschichtungsmaterials bei einem Flüssigkeitsgehalt von 0 % besonders genau bestimmen. Es versteht sich jedoch, dass auch jede andere mathematische, nicht-lineare Funktion, beispielsweise auch eine exponentielle Funktion, in Frage kommt, wenn das Trocknungsverhalten des jeweiligen Beschichtungsmaterials ein solches Trocknungsverhalten in Abhängigkeit von der Zeit bzw. dem aktuellen Flüssigkeitsgehalt aufweist.

In einer weiteren Ausführungsform wird Schritt d. für die zweite Anfangsschichtdicke wiederholt und der fiktive Flüssigkeitsgehalt bei der Schichtdicke von 0 mm in Schritt e. aus dem Schnittpunkt der linearen Funktion für die erste und die zweite Anfangsschichtdicke bestimmt. Auch dies führt zu einer Verbesserung der Genauigkeit der mit dem erfindungsgemäßen Verfahren bestimmten Schichtdicke des Beschichtungsmaterials.

Die Prognose der Schichtdicke im trocknen Zustand ergibt insbesondere für Wasser-basierte Beschichtungsmaterialien zuverlässige Ergebnisse, ist aber auch für andere Beschichtungsmaterialien anwendbar.

In einer weiteren Ausführungsform ist die elektromagnetische Strahlung eine breitbandige Strahlung, vorzugsweise mit Frequenzen in einem Frequenzbereich von 100 GHz bis 30 Terrahertz. In diesem Frequenzbereich zeigt sich eine besonders hohe Tiefenauflösung bei vergleichsweise hoher Eindringtiefe. Es können damit auch Schichtsysteme mit höherer Materialstärke untersucht werden, die sich jedoch aus sehr dünnen Schichten zusammensetzen. Während Mikrowellenstrahlung zwar eine höhere Eindringtiefe aufweist, jedoch eine geringere Tiefenauflösung, scheitern optische Verfahren an ihrer geringen Eindringtiefe. Der beanspruchte Frequenzbereich bietet damit einen optimierten Messbereich für sowohl eine gute Tiefenauflösung als auch eine hohe Eindringtiefe.

In einer weiteren Ausführungsform handelt es sich bei dem Beschichtungsmaterial um einen Lack, insbesondere einen auf Wasser oder Lösemittel basierten Lack.

In einer weiteren Ausführungsform zeigt eine dielektrische Eigenschaft des Beschichtungsmaterials über einen Trocknungszeitraum eine mindestens 1%ige Änderung. Mit dem erfindungsgemäßen Verfahren können damit auch kleinste Änderungen in den Eigenschaften des Beschichtungsmaterials erfasst werden und damit die Schichtdicke genau ermittelt werden. Dies ist zudem auch bei sehr dünnen Schichten möglich, die eine Dicke von wenigen Mikrometern aufweisen.

In einer weiteren Ausführungsform weist eine dielektrische Eigenschaft des Beschichtungsmaterials eine lineare Änderung über einen Trocknungszeitraum auf. Dies bietet ebenfalls den Vorteil, dass die Schichtdicke genauer erfasst werden kann.

In einer weiteren Ausführungsform liegen die mit dem Verfahren zu bestimmenden Schichtdicken im Bereich von 2 µm bis 5000 µm. Das erfindungsgemäße Verfahren eignet sich damit zur Bestimmung der Schichtdicke in einem vergleichsweise großen Bereich.

Weitere Vorteile, Merkmale und Anwendungsmöglichkeiten der vorliegenden Erfindung werden anhand der folgenden Beschreibung einer Ausführungsform und der dazugehörigen Figu-ren deutlich. In den Figuren sind gleiche Elemente mit gleichen Bezugszeichen bezeichnet.
- Figur 1: zeigt eine schematische Darstellung eines Beschichtungsmaterials auf der Oberfläche eines Prüfobjektes.
- Figur 2: zeigt eine schematische Übersicht über eine Ausführungsform des erfindungsgemäßen Verfahrens.
- Figur 3: zeigt den Zusammenhang zwischen der Schichtdicke eines Beschichtungsmaterials und dem aktuellen Flüssigkeitsgehalt der Beschichtung für verschiedene Anfangsschichtdicken.

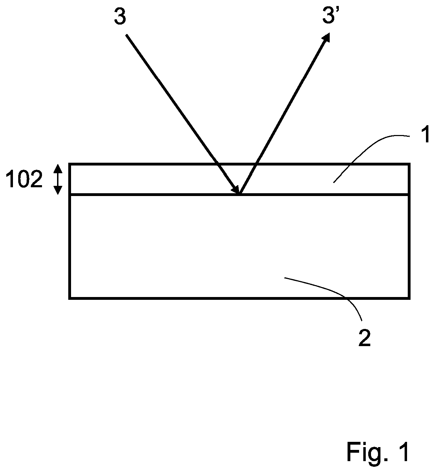

In Figur 1 ist schematisch ein Beschichtungsmaterial 1 mit einer Schichtdicke 102 auf der Oberfläche eines Prüfobjektes 2 dargestellt. Das Beschichtungsmaterial 1 wird mit einer elektromagnetischen Strahlung 3 bestrahlt, die mit dem Beschichtungsmaterial 1, in diesem Beispiel einem Wasser-basierten Lack, wechselwirkt und an der Oberfläche des Prüfobjektes 2, beispielsweise eine Autokarosserie, zumindest teilweise reflektiert wird. Diese reflektierte elektromagnetische Strahlung 3' wird im Rahmen des erfindungsgemäßen Verfahrens zur Bestimmung der Schichtdicke 102 verwendet. Bei der elektromagnetischen Strahlung 3 handelt es sich um eine breitbandige, gepulste Strahlung mit Frequenzen zwischen 100 GHz und 5 THz.

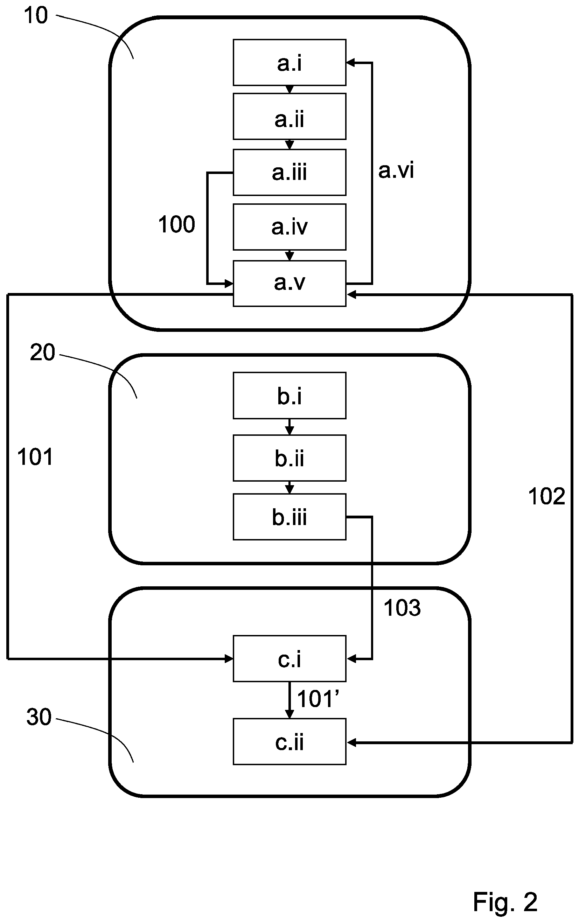

Der genaue Ablauf einer Ausführungsform des Verfahrens ist im Detail in Figur 2 dargestellt. Das erfindungsgemäße Verfahren gliedert sich in drei Teilschritte: eine Kalibrierroutine 10, eine Probenmessung 20 und eine Auswertung 30.

Im Rahmen der Kalibrierroutine 10 wird das Wechselwirkungsverhalten des Beschichtungsmaterials 1 bei Auftreffen der elektromagnetischen Strahlung 3 während verschiedener Trocknungszustände untersucht. Dazu wird zunächst in Schritte a.i. das nasse Beschichtungsmaterial 1 auf eine Kalibrieroberfläche mit einer ersten Anfangsschichtdicke aufgetragen. Anschließend wird in Schritt a.ii. das Beschichtungsmaterial 1 mit einer elektromagnetischen Strahlung 3 zu einem Endzeitpunkt eines ersten Trocknungszeitraumes nach dem Auftragen beleuchtet. Vorzugsweise beginnt die Untersuchung des Beschichtungsmaterials 1 mit der elektromagnetischen Strahlung 3 unmittelbar nach dem Auftragen auf die Kalibrieroberfläche.

Der erste Trocknungszeitraum beginnt daher unmittelbar mit dem Auftragen des Beschichtungsmaterials 1 auf die Kalibrieroberfläche, sobald die Anfangsschichtdicke erreicht ist und endet nach möglichst kurzer Zeit wieder. Die erste Kalibriermessung nach dem Auftragen beschreibt also vorzugsweise die Materialeigenschaften des nassen Beschichtungsmaterials 1, welches noch nahezu keiner Trocknung unterlag.

In einem nächsten Schritt a.iii. wird das elektrische Feld der an der mit dem Beschichtungsmaterial 1 beschichteten Kalibrieroberfläche reflektierten elektromagnetischen Strahlung 3' in Abhängigkeit von der Zeit zu dem Endzeitpunkt des ersten Trocknungszeitraumes als Kalibriersignal 100 detektiert. Das Kalibriersignal 100 repräsentiert damit das Wechselwirkungsverhalten des Beschichtungsmaterials 1 mit der elektromagnetischen Strahlung 3 zu einem bestimmten Endzeitpunkt des ersten Trocknungszeitraumes.

Darüber hinaus wird in Schritt iv. mithilfe eines laserbasierten Verfahrens zusätzlich die Schichtdicke 102 des Beschichtungsmaterials 1 zu dem Endzeitpunkt des ersten Trocknungszeitraumes bestimmt.

In Schritt v. werden sowohl die bestimmte Schichtdicke 102, das Kalibriersignal 100 oder ein das Kalibriersignal 100 repräsentierender Parameter und der erste Trocknungszeitraum als Datensatz in einer Datenbank abgelegt. Danach wird die Kalibriermessung für mehrere weitere Trocknungszeiträume, die sich von dem ersten Trocknungszeitraum unterscheiden, wiederholt. Die Anzahl der Kalibriermessungen orientiert sich dabei an dem Trocknungsverhalten des Beschichtungsmaterials 1 und wird so gewählt, dass das Trocknungsverhalten möglichst exakt abgebildet wird, d.h. alle wesentlichen Änderungen der dielektrischen Eigenschaften des Beschichtungsmaterials in Abhängig von dem Feuchtigkeitsgehalt des Beschichtungsmaterials 1 ermittelt werden.

Im Rahmen der Probenmessung 20 wird ebenfalls ein nasses Beschichtungsmaterial 1 auf eine Oberfläche des Prüfobjektes 2 mit einer beliebigen Anfangsschichtdicke aufgetragen. Anschließend erfolgt wieder die Beleuchtung des Beschichtungsmaterials 1 mit der elektromagnetischen Strahlung 3 zu einem Endzeitpunkt eines beliebigen Trocknungszeitraumes. Der Trocknungszeitraum beginnt mit dem Erreichen der Anfangsschichtdicke beim Auftragen des Beschichtungsmaterials 1. In diesem Fall ist die Schichtdicke 102 des Beschichtungsmaterials 1 unbekannt und soll ermittelt werden. Hierzu wird ebenfalls das elektrische Feld der an der mit dem Beschichtungsmaterial 1 beschichteten Oberfläche des Prüfobjektes 2 reflektierten elektromagnetischen Strahlung 3' in Abhängigkeit von der Zeit zu dem Endzeitpunkt des beliebigen Trocknungszeitraumes als Messsignal 103 detektiert.

Aus dem Messsignal 103 und den Datensätzen der Datenbank wird dann in der Auswertung 30 die Schichtdicke 102 des Beschichtungsmaterials 1 auf der Oberfläche des Prüfobjektes 2 zu dem Endzeitpunkt des beliebigen Trocknungszeitraumes bestimmt. Zu diesem Zweck wird das Messsignal 103 mit Vergleichssignalen 101 verglichen, wobei die Vergleichssignale 101 auf den Kalibriersignalen 100 zu Endzeitpunkten verschiedener Trocknungszeiträume beruhen. Gemäß der hier beschriebenen Ausführungsform werden aus den Kalibriersignalen 100 und der in der Kalibrierroutine 10 bestimmten Schichtdicke 102 die dielektrischen Eigenschaften des Beschichtungsmaterials 1 zu dem jeweiligen Endzeitpunkt des Trocknungszeitraumes bestimmt und in der Datenbank abgelegt. Auf Basis dieser dielektrischen Eigenschaften werden simulierte Vergleichssignale 101 erzeugt, mit denen das Messsignal 103 verglichen wird. Dabei besteht die Gruppe der Vergleichssignale 101 nicht nur aus den unmittelbar gewonnenen Daten der Kalibriersignale 100, sondern wurde um simulierte Vergleichssignale 101 ergänzt, die auf einer Interpolation der dielektrischen Eigenschaften und der Schichtdicke 102 zwischen zwei Endzeitpunkten zweier verschiedener Trocknungszeiträume beruhen.

Aus dem Vergleich des Messsignals 103 mit den Vergleichssignalen 101 wird dann das Vergleichssignal 101' mit der geringsten Abweichung zu dem Messsignal 103 bestimmt. Ist dies erfolgt, wird aus dem bestimmten Vergleichssignal 101' die Schichtdicke 102 des Beschichtungsmaterials 1 auf der Oberfläche des Prüfkörpers 2 zu dem Endzeitpunkt des beliebigen Trocknungszeitraumes ermittelt, indem die dem Vergleichssignal 101' zugrunde liegende Schichtdicke 102 aus der in der Kalibrierroutine 10 etablierten Datenbank ausgelesen wird.

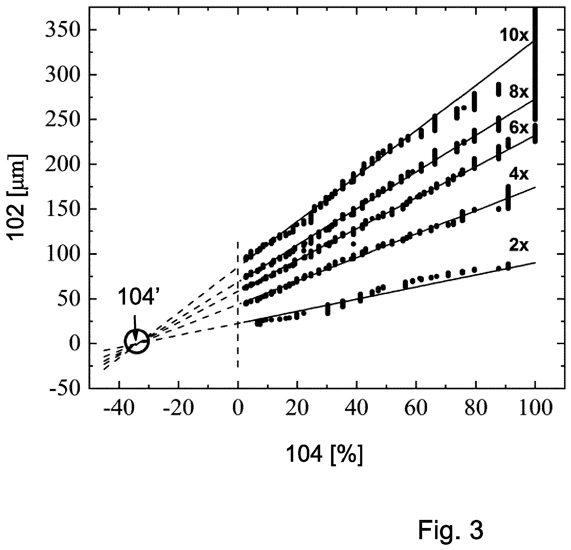

In Figur 3 ist zudem eine Erweiterung des erfindungsgemäßen Verfahrens dargestellt, wonach auf Grundlage der bestimmten Schichtdicke 102 des Beschichtungsmaterials 1 auf der Oberfläche des Prüfobjektes 2 zu einem Endzeitpunkt des beliebigen Trocknungszeitraumes eine Prognose für die Schichtdicke 102 im trockenen Zustand erstellt werden kann. Zu diesem Zweck wird die Kalibrierroutine 10 für verschiedene Anfangsschichtdicken, die dem 2-fachen, 4, fachen, 6-fachen und 8-fachen der ursprünglichen Anfangsschichtdicke entsprechen, wiederholt.

Hierzu werden die in Schritt a.iv. bestimmten Schichtdicken 102 des Beschichtungsmaterials 1 auf der Kalibrieroberfläche in Abhängigkeit von einem auf den Endzeitpunkten der verschiedenen Trocknungszeiträume basierenden Flüssigkeitsgehalt 104 für die jeweilige Anfangsschichtdicke durch eine erste mathematische Funktion angenähert. Diese Annäherung erfolgt für alle während der Kalibrierroutine 10 vermessenen Anfangsschichtdicken. Anschließend wird ein fiktiver Flüssigkeitsgehalt 104' bei einer Schichtdicke von 0 mm aus dem Schnittpunkt der mathematischen Funktionen zu den verschiedenen Anfangsschichtdicken ermittelt. Die Schichtdicke von 0 mm und der dazugehörige fiktive Flüssigkeitsgehalt 104' wird als erstes Wertepaar festgehalten.

Des Weiteren wird die in Schritt c.ii. bestimmte Schichtdicke 102 und der aktuelle Flüssigkeitsgehalt 104 zu dem Endzeitpunkt des beliebigen Trocknungszeitraums, zu welchem auch die Schichtdicke 102 bestimmt wurde, als zweites Wertepaar festgehalten. Ist die Schichtdicke 102 des Beschichtungsmaterials 1 auf dem Prüfobjekt 2 bekannt, kann aus dem Messsignal 103 oder aus den Datensätzen der Datenbank auch der aktuelle Flüssigkeitsgehalt 104 gewonnen werden.

Im nächsten Schritt wird die erste mathematische Funktion so angepasst, dass das erste und das zweite Wertepaar von der ersten mathematischen Funktion beschrieben werden. Sobald die erste mathematische Funktion angepasst wurde, wird die Schichtdicke 102 des Beschichtungsmaterials 1 bei einem Flüssigkeitsgehalt 104 von 0 % berechnet, sodass die Schichtdicke 102 des Beschichtungsmaterials 1 im trocknen Zustand vorhergesagt wird.

### Bezugszeichenliste

- 1: Beschichtungsmaterial
- 2: Prüfobjekt
- 3: elektromagnetische Strahlung
- 3': reflektierte elektromagnetische Strahlung
- 10: Kalibrierroutine
- 20: Probenmessung
- 30: Auswertung
- 100: Kalibriersignal
- 101: Vergleichssignal
- 101': Vergleichssignal mit geringster Abweichung
- 102: Schichtdicke
- 103: Messsignal
- 104: Flüssigkeitsgehalt
- 104': fiktiver Flüssigkeitsgehalt

## Patentansprüche

1. Verfahren zur Bestimmung einer Schichtdicke (102) eines auf einer Oberfläche eines Prüfobjektes (2) aufgetragenen Beschichtungsmaterials (1) mit den Schritten:
a. Durchführen einer Kalibrierroutine (10) mit den Schritten:
i. Auftragen des nassen Beschichtungsmaterials (1) auf eine Kalibrieroberfläche mit einer ersten Anfangsschichtdicke,
ii. Beleuchten der mit dem Beschichtungsmaterial (1) beschichteten Kalibrieroberfläche mit einer elektromagnetischen Strahlung (3) zu einem Endzeitpunkt eines ersten Trocknungszeitraums nach dem Auftragen in Schritt a.i.,
iii. Detektieren eines elektrischen Feldes der an der mit dem Beschichtungsmaterial (1) beschichteten Kalibrieroberfläche reflektierten elektromagnetischen Strahlung (3') in Abhängigkeit von der Zeit zu dem Endzeitpunkt des ersten Trocknungszeitraums als Kalibriersignal (100),
iv. Bestimmen einer Schichtdicke (102) des Beschichtungsmaterials (1) zu dem Endzeitpunkt des ersten Trocknungszeitraums,
v. Ablegen eines Datensatzes in einer Datenbank, wobei der Datensatz mindestens die bestimmte Schichtdicke (102), den ersten Trocknungszeitraum und einen das Kalibriersignal (100) repräsentierenden Parameter beschreibt,
vi. Wiederholen der Schritte ii. bis v. für einen Endzeitpunkt zumindest eines zweiten Trocknungszeitraums nach dem Auftragen in Schritt a.i., wobei der zweite Trocknungszeitraum von dem ersten Trocknungszeitraum verschieden ist,
b. Durchführen einer Probenmessung (20) mit den Schritten:
i. Auftragen des nassen Beschichtungsmaterials (1) auf eine Oberfläche des Prüfobjekts (2) mit einer beliebigen Anfangsschichtdicke,
ii. Beleuchten der mit dem Beschichtungsmaterial (1) beschichteten Oberfläche des Prüfobjekts mit der elektromagnetischen Strahlung (3) zu einem Endzeitpunkt eines beliebigen Trocknungszeitraums nach dem Auftragen in Schritt b.i.,, wobei die Schichtdicke (102) des Beschichtungsmaterials (1) unbekannt ist,
iii. Detektieren eines elektrischen Feldes der an der mit dem Beschichtungsmaterial (1) beschichteten Oberfläche des Prüfobjekts (2) reflektierten elektromagnetischen Strahlung (3') in Abhängigkeit von der Zeit zu dem Endzeitpunkt des beliebigen Trocknungszeitraumes als Messsignal (103),
c. Bestimmen der Schichtdicke (102) des Beschichtungsmaterials (1) auf der Oberfläche des Prüfobjekts (2) zu dem Endzeitpunkt des beliebigen Trocknungszeitraums mit den Schritten:
i. Bestimmen eines aus der Datenbank abgeleiteten Vergleichssignals (101') mit der geringsten Abweichung zu dem Messsignal (103) durch Vergleichen aus der Datenbank abgeleiteter Vergleichssignale (101) zu Endzeitpunkten verschiedener Trocknungszeiträume mit dem Messsignal (103),
ii. Bestimmen der Schichtdicke (102) des Beschichtungsmaterials (1) auf der Oberfläche des Prüfobjektes (2) zu dem Endzeitpunkt des beliebigen Trocknungszeitraums anhand des in Schritt c.i. bestimmten Vergleichssignals (101') mit der geringsten Abweichung zu dem Messsignal (103)
**dadurch gekennzeichnet, dass** das Verfahren weiterhin die Schritte aufweist:
d. Anpassen einer ersten mathematischen Funktion an die in Schritt a.iv. bestimmten Schichtdicken (102) des Beschichtungsmaterials (1) in Abhängigkeit von einem auf den Endzeitpunkten der verschiedenen Trocknungszeiträume basierenden Flüssigkeitsgehalt für die erste Anfangsschichtdicke,
e. Bestimmen eines der Schichtdicke von 0 mm zugeordneten fiktiven Flüssigkeitsgehalts (104') für die erste Anfangsschichtdicke aus der ersten mathematischen Funktion als erstes Wertepaar,
f. Bestimmen eines aktuellen Flüssigkeitsgehalts (104) zu dem Endzeitpunkt des beliebigen Trocknungszeitraums für die beliebige Anfangsschichtdicke aus der in Schritt c.ii. bestimmten Schichtdicke (102) des Beschichtungsmaterials (1) und dem in Schritt b.iii. erfassten Messsignal (103) als zweites Wertepaar,
g. Anpassen der ersten mathematischen Funktion, sodass das erste und zweite Wertepaar von der ersten mathematischen Funktion beschrieben werden,
h. Berechnen einer Schichtdicke (102) des Beschichtungsmaterials (1) bei der beliebigen Anfangsschichtdicke bei einem beliebigen Flüssigkeitsgehalt (104) von X % unter Verwendung der in Schritt g. angepassten ersten mathematischen Funktion.

2. Verfahren nach dem vorhergehenden Anspruch, wobei in Schritt a.v. als Parameter das Kalibriersignal (100) in dem Datensatz der Datenbank abgelegt wird, wobei in Schritt c.i. das Vergleichssignal (101) das Kalibriersignal (100) ist und wobei das Bestimmen der Schichtdicke (102) in Schritt c.ii. durch Auslesen der zu dem bestimmten Kalibriersignal (100) in dem Datensatz der Datenbank beschriebenen Schichtdicke (102) erfolgt.

3. Verfahren nach einem der vorhergehenden Ansprüche, wobei die Kalibrierroutine (10) weiterhin den Schritt aufweist, dass aus der in Schritt a.iv. bestimmten Schichtdicke (102) und dem Kalibriersignal (100) mindestens eine dielektrische Eigenschaft für den Endzeitpunkt des ersten Trocknungszeitraums abgeleitet wird, wobei die dielektrischen Eigenschaft in dem Datensatz in Schritt a.v. als Parameter zusätzlich zu dem Kalibriersignal (100) oder statt dem Kalibriersignal (100) abgelegt wird, wobei das Bestimmen des Vergleichssignals (101') mit der geringsten Abweichung in Schritt c.i. derart erfolgt, dass die aus den Parametern für Endzeitpunkte verschiedener Trocknungszeiträume abgeleiteten Vergleichssignale (101) durch simulierte Vergleichssignale (101) ergänzt oder ersetzt werden, wobei die simulierten Vergleichssignale (101) auf einer Interpolation der abgeleiteten dielektrischen Eigenschaften und der gemessenen Schichtdicken (102) zweier Endzeitpunkte verschiedener Trocknungszeiträume beruhen und wobei in Schritt c.ii. die mit dem simulierten Vergleichssignal (101) verknüpfte interpolierte Schichtdicke (102) als Schichtdicke (102) des Beschichtungsmaterials (1) auf der Oberfläche des Prüfobjektes (2) verwendet wird, wenn in Schritt c.i. ein simuliertes Vergleichssignal (101') als Vergleichssignal (101') mit der geringsten Abweichung zum Messsignal (103) bestimmt wird.

4. Verfahren nach einem der vorhergehenden Ansprüche, wobei für jedes Vergleichen in Schritt c.i. ein Korrelationskoeffizient für eine Korrelation zwischen dem jeweiligen Vergleichssignal (101) und dem Messsignal (103) berechnet wird, wobei der größte Korrelationskoeffizient bestimmt wird und wobei als Schichtdicke (102) des Beschichtungsmaterials (1) auf der Oberfläche des Prüfobjektes (2) zu dem Endzeitpunkt des beliebigen Trocknungszeitraums die Schichtdicke (102) aus der Datenbank ausgelesen wird, die in dem Datensatz des Vergleichssignals (101') mit dem größten Korrelationskoeffizienten beschrieben ist.

5. Verfahren nach Anspruch 4, wobei der Korrelationskoeffizient Werte zwischen 0 und 1 annimmt, wobei der Wert 1 eine exakte Übereinstimmung zwischen Vergleichssignal (101) und Messsignal (103) und der Wert 0 keine Übereinstimmung zwischen Vergleichssignal (101) und Messsignal (103) bedeutet.

6. Verfahren nach einem der vorhergehenden Ansprüche, wobei die Schritte a.i. bis a.vi für mindestens eine zweite Anfangsschichtdicke, die von der ersten Anfangsschichtdicke verschieden ist, wiederholt werden.

7. Verfahren nach einem der vorhergehenden Ansprüche , wobei die erste mathematische Funktion eine lineare Funktion ist.

8. Verfahren nach Anspruch 7 soweit abhängig von Anspruch 6, wobei Schritt d. für die zweite Anfangsschichtdicke wiederholt wird und wobei der fiktive Flüssigkeitsgehalt (104') bei der Schichtdicke von 0 mm in Schritt e. aus dem Schnittpunkt der linearen Funktionen für die erste und die zweite Anfangsschichtdicke bestimmt wird.

9. Verfahren nach einem der vorhergehenden Ansprüche, wobei die elektromagnetische Strahlung (3, 3') eine breitbandige Strahlung, vorzugsweise mit Frequenzen in einem Frequenzbereich von 100 GHz bis 30 THz, ist.

10. Verfahren nach einem der vorhergehenden Ansprüche, wobei es sich bei dem Beschichtungsmaterial (1) um einen Lack, insbesondere einen auf Wasser oder Lösemittel basierten Lack, handelt.

11. Verfahren nach einem der vorhergehenden Ansprüche, wobei eine dielektrische Eigenschaft des Beschichtungsmaterials (1) über einen Trocknungszeitraum eine mindestens 1-prozentige Änderung zeigt.

12. Verfahren nach einem der vorhergehenden Ansprüche, wobei eine dielektrische Eigenschaft des Beschichtungsmaterials (1) eine lineare Änderung über einen Trocknungszeitraum aufweist.

13. Verfahren nach einem der vorhergehenden Ansprüche, wobei die mit dem Verfahren zu bestimmende Schichtdicke (102) im Bereich von 2 µm bis 5000 µm liegt.

## Claims

1. A method for determining a layer thickness (102) of a coating material (1) applied to a surface of a test object (2), comprising the steps of:
a. performing a calibration routine (10) comprising the steps of:
i. applying the wet coating material (1) to a calibration surface comprising a first initial layer thickness,
ii. illuminating the calibration surface coated with the coating material (1) with electromagnetic radiation (3) at an end time of a first drying period after application in step a.i.,
iii. detecting an electric field of the electromagnetic radiation (3') reflected at the calibration surface coated with the coating material (1) as a function of time at the end time of the first drying period as a calibration signal (100),
iv. determining a layer thickness (102) of the coating material (1) at the end time of the first drying period,
v. storing a data set in a database, wherein the data set describes at least the determined layer thickness (102), the first drying period and a parameter representing the calibration signal (100),
vi. repeating steps ii. to v. for end time of at least one second drying period after application in step a.i., wherein the second drying period is different from the first drying period,
b. performing a sample measurement (20) comprising the steps:
i. applying the wet coating material (1) to a surface of the test object (2) comprising an arbitrary initial layer thickness,
ii. illuminating the surface of the test object coated with the coating material (1) with the electromagnetic radiation (3) at an end time of an arbitrary drying period after application in step b.i., wherein the layer thickness (102) of the coating material (1) is unknown,
iii. detecting an electric field of the electromagnetic radiation (3') reflected at the surface of the test object (2) coated with the coating material (1) as a function of time at the end time of the arbitrary drying period as a measurement signal (103),
c. determining the layer thickness (102) of the coating material (1) on the surface of the test object (2) at the end time of the arbitrary drying period with the steps:
i. determining a reference signal (101') derived from the database with the smallest deviation from the measurement signal (103) by comparing reference signals (101) derived from the database at final points in time of different drying periods with the measurement signal (103),
ii. determining the layer thickness (102) of the coating material (1) on the surface of the test object (2) at the end time of the arbitrary drying period on the basis of the reference signal (101') determined in step c.i. with the smallest deviation from the measurement signal (103),
**characterised in that** the method further comprises the steps of:
d. fitting a first mathematical function to the layer thicknesses (102) of the coating material (1) determined in step a.iv. as a function of a liquid content for the first initial layer thickness based on the final points in time of the different drying periods,
e. determining a fictitious liquid content (104') assigned to the layer thickness of 0 mm for the first initial layer thickness from the first mathematical function as a first pair of values,
f. Determining a current liquid content (104) at the end time of the arbitrary drying period for the arbitrary initial layer thickness from the layer thickness (102) of the coating material (1) determined in step c.ii. and the measurement signal (103) seted in step b.iii. as a second pair of values,
g. fitting the first mathematical function so that the first and second pairs of values are described by the first mathematical function,
h. calculating a layer thickness (102) of the coating material (1) at the arbitrary initial layer thickness at an arbitrary liquid content (104) of X % using the first mathematical function fitted in step g.

2. The method according to the previous claim, wherein in step a.v. the calibration signal (100) is stored as a parameter in the data set of the database, wherein in step c.i. the reference signal (101) is the calibration signal (100) and wherein determining the layer thickness (102) in step c.ii. is implemented by reading out the layer thickness (102) described in the data set of the database for the determined calibration signal (100).

3. The method according to any one of the previous claims, wherein the calibration routine (10) further comprises the step of deriving at least one dielectric property for the end time of the first drying period from the layer thickness (102) determined in step a.iv. and the calibration signal (100), wherein the dielectric property is stored in the data set in step a.v. as a parameter in addition to the calibration signal (100) or instead of the calibration signal (100), wherein determining of the reference signal (101') with the smallest deviation in step c.i. is performed in such a way that the reference signals (101) derived from the parameters for end times of different drying periods are supplemented or replaced by simulated reference signals (101), wherein the simulated reference signals (101) are based on an interpolation of the derived dielectric properties and the measured layer thicknesses (102) of two end times of different drying periods, and wherein in step c.ii. the interpolated layer thickness (102) linked to the simulated reference signal (101) is used as the layer thickness (102) of the coating material (1) on the surface of the test object (2) if, in step c.i., a simulated reference signal (101') is determined as the reference signal (101') with the smallest deviation from the measurement signal (103).

4. The method according to any one of the previous claims, wherein for each reference in step c.i. a correlation coefficient is calculated for a correlation between the respective reference signal (101) and the measurement signal (103), wherein the largest correlation coefficient is determined and wherein the layer thickness (102) of the coating material (1) on the surface of the test object (2) at the end time of the arbitrary drying period is read out of the database, wherein the layer thickness (102) is described in the data set of the reference signal (101') with the largest correlation coefficient.

5. The method according to claim 4, wherein the correlation coefficient has values between 0 and 1, wherein the value 1 means an exact match between the reference signal (101) and the measurement signal (103) and the value 0 means no match between the reference signal (101) and the measurement signal (103).

6. The method according to any one of the previous claims, wherein steps a.i. to a.vi are repeated for at least one second initial layer thickness which is different from the first initial layer thickness.

7. The method according to any one of the previous claims, wherein the first mathematical function is a linear function.

8. The method according to claim 7, insofar as dependent on claim 6, wherein step d. is repeated for the second initial layer thickness and wherein the fictitious liquid content (104') at the layer thickness of 0 mm in step e. is determined from the intersection of the linear functions for the first and second initial layer thicknesses.

9. The method according to any one of the previous claims, wherein the electromagnetic radiation (3, 3') is broadband radiation, preferably comprising frequencies in a frequency range from 100 GHz to 30 THz.

10. The method according to any one of the previous claims, wherein the coating material (1) is a lacquer, in particular a water- or solvent-based lacquer.

11. The method according to any one of the previous claims, wherein a dielectric property of the coating material (1) shows a change of at least 1 per cent over a drying period.

12. The method according to any one of the previous claims, wherein a dielectric property of the coating material (1) comprises a linear change over a drying period.

13. The method according to any one of the previous claims, wherein the layer thickness (102) to be determined by the method is in the range from 2 µm to 5000 µm.

## Revendications

1. Procédé de détermination sans contact d'une épaisseur de couche (102) d'un matériau de revêtement (1) appliqué sur une surface d'un objet de test (2), avec les étapes :
a. effectuer une routine de calibrage (10) avec les étapes :
i. appliquer le matériau de revêtement (1) humide sur une surface de calibrage avec une première épaisseur de couche de début,
ii. éclairer la surface de calibrage revêtue du matériau de revêtement (1) avec un rayonnement électromagnétique (3) à un moment de fin d'une première période de séchage après l'application à l'étape a.i.,
iii. détecter un champ électrique du rayonnement électromagnétique (3') réfléchi sur la surface de calibrage revêtue du matériau de revêtement (1), en fonction du temps au moment de fin de la première période de séchage, comme signal de calibrage (100),
iv. déterminer une épaisseur de couche (102) du matériau de revêtement (1) au moment de fin de la première période de séchage,
v. enregistrer un ensemble de données dans une base de données, l'ensemble de données décrivant au moins l'épaisseur de couche (102) déterminée, la première période de séchage et un paramètre représentant le signal de calibrage (100),
vi. répéter les étapes ii. à v. pour un moment de fin d'au moins une deuxième période de séchage après l'application à l'étape a.i., la deuxième période de séchage étant différente de la première période de séchage,
b. effectuer un échantillon de mesure (20) avec les étapes :
i. appliquer le matériau de revêtement (1) humide sur une surface de l'objet de test (2) avec une épaisseur de couche de départ quelconque,
ii. éclairer la surface de l'objet de test revêtue du matériau de revêtement (1) avec un rayonnement électromagnétique (3) à un moment de fin d'une période de séchage quelconque après l'application à l'étape b.i., l'épaisseur de couche (102) du matériau de revêtement (1) étant inconnue,
iii. détecter un champ électrique du rayonnement électromagnétique (3') réfléchi sur la surface de l'objet de test (2) revêtue du matériau de revêtement (1), en fonction du temps au moment de fin de la période de séchage quelconque, comme signal de mesure (103),
c. déterminer l'épaisseur de couche (102) du matériau de revêtement (1) sur la surface de l'objet de test (2) au moment de fin de la période de séchage quelconque avec les étapes :
i. déterminer un signal de comparaison (101') dérivé de la base de données, ayant l'écart le plus petit du signal de mesure (103), par comparaison de signaux de comparaison (101) dérivés de la base de données, issus de moments de fin de différentes périodes de séchage, avec le signal de mesure (103),
ii. déterminer l'épaisseur de couche (102) du matériau de revêtement (1) sur la surface de l'objet de test (2) au moment de fin de la période de séchage quelconque, sur la base du signal de comparaison (101') déterminé à l'étape c.i., ayant l'écart le plus petit du signal de mesure (103),
**caractérisé en ce que** le procédé comprend en outre les étapes :
d. adapter une première fonction mathématique aux épaisseurs de couche (102) du matériau de revêtement (1) déterminées à l'étape a.iv., en fonction d'une teneur en liquide basée sur les moments de fin des différentes périodes de séchage, pour la première épaisseur de couche de début,
e. déterminer, pour la première épaisseur de couche de début, à partir de la première fonction mathématique, une teneur en liquide (104') fictive attribuée à l'épaisseur de couche de 0 mm, comme première paire de valeurs,
f. déterminer une teneur en liquide actuelle (104) au moment de fin de la période de séchage quelconque pour l'épaisseur de couche de début quelconque à partir de l'épaisseur de couche (102) du matériau de revêtement (1) déterminée à l'étape c.ii. et du signal de mesure (103) saisi à l'étape b.iii., comme deuxième paire de valeurs,
g. adapter la première fonction mathématique de sorte que la première et la deuxième paires de valeurs soient décrites par la première fonction mathématique,
h. calculer une épaisseur de couche (102) du matériau de revêtement (1) à l'épaisseur de couche de début quelconque à une teneur en liquide (104) quelconque de X % en utilisant la première fonction mathématique adaptée à l'étape g.

2. Procédé selon la revendication 1, le signal de calibrage (100) étant enregistré à l'étape a.v. comme paramètre dans l'ensemble de données dans la base de données, le signal de comparaison (101) étant à l'étape c.i. le signal de calibrage (100) et la détermination de l'épaisseur de couche (102) à l'étape c.ii. est effectuée par une lecture de l'épaisseur de couche (102) décrite en référence au signal de calibrage (100) spécifique dans l'ensemble de données dans la base de données.

3. Procédé selon l'une des revendications précédentes, la routine de calibrage (10) comprenant en outre l'étape de dériver de l'épaisseur de couche (102) déterminée à l'étape a.iv. et du signal de calibrage (100) au moins une caractéristique diélectrique du moment de fin de la première période de séchage, la caractéristique diélectrique étant enregistrée à l'étape a.v., dans l'ensemble de données, comme un paramètre en plus du signal de calibrage (100) ou à la place du signal de calibrage (100), la détermination du signal de comparaison (101') avec l'écart le plus petit à l'étape c.i. étant effectuée de façon que les signaux de comparaison (101) dérivés des paramètres pour les moments de fin de différentes périodes de séchage soient complétés ou remplacés par des signaux de comparaison (101) simulés, les signaux de comparaison (101) simulés étant basés sur une interpolation des caractéristiques diélectriques dérivées et des épaisseurs de couche (102) mesurées de deux moments de fin de différentes périodes de séchage, et, à l'étape c.ii., l'épaisseur de couche (102) interpolée attribuée au signal de comparaison (101) simulé étant utilisé comme épaisseur de couche (102) du matériau de revêtement (1) sur la surface de l'objet de test (2), lorsque, à l'étape c.i., un signal de comparaison (101') simulé est déterminé comme signal de comparaison (101') avec l'écart le plus petit par rapport au signal de mesure (103).

4. Procédé selon l'une des revendications précédentes, pour chaque comparaison à l'étape c.i., un coefficient de corrélation étant calculé pour une corrélation entre le signal de comparaison (101) respectif et le signal de mesure (103), le coefficient de corrélation le plus grand étant déterminé et étant lue de la base de données comme épaisseur de couche (102) du matériau de revêtement (1) sur la surface de l'objet de test (2) au moment de fin de la période de séchage quelconque, l'épaisseur de couche (102) décrite dans l'ensemble de données du signal de comparaison (101') avec le coefficient de corrélation le plus grand.

5. Procédé selon la revendication 4, le coefficient de corrélation ayant des valeurs entre 0 et 1, la valeur 1 signifiant une correspondance exacte entre le signal de comparaison (101) et le signal de mesure (103) et la valeur 0 signifiant l'absence de correspondance entre le signal de comparaison (101) et le signal de mesure (103).

6. Procédé selon l'une des revendications précédentes, les étapes a.i. à a.vi. étant répétées au moins pour une deuxième épaisseur de couche de début différente de la première épaisseur de couche de début.

7. Procédé selon l'une des revendications précédentes, la première fonction mathématique étant une fonction linéaire.

8. Procédé selon la revendication 7 si celle-ci dépend de la revendication 6, l'étape d. étant répétée pour la deuxième épaisseur de couche de début et la teneur en liquide (104') fictive étant déterminée à l'épaisseur de couche de 0 mm à l'étape e. à partir de l'intersection des fonctions linéaires pour la première et la deuxième épaisseurs de couche de début.

9. Procédé selon l'une des revendications précédentes, le rayonnement électromagnétique (3, 3') étant un rayonnement à large bande, de préférence à des fréquences dans une plage de fréquences de 100 GHZ à 30 THz.

10. Procédé selon l'une des revendications précédentes, le matériau de revêtement (1) étant un vernis, notamment un vernis à base d'eau ou de diluant.

11. Procédé selon l'une des revendications précédentes, la caractéristique diélectrique du matériau de revêtement (1) montrant un changement d'au moins 1 % sur une période de séchage.

12. Procédé selon l'une des revendications précédentes, la caractéristique diélectrique du matériau de revêtement (1) montrant un changement linéaire sur une période de séchage.

13. Procédé selon l'une des revendications précédentes, l'épaisseur de couche (102) à déterminer par le procédé étant de l'ordre de 2 µm à 5000 µm.
